# EUROPÄISCHE PATENTSCHRIFT

(11) **EP 0 653 338 B1**
(45) Veröffentlichungstag und Bekanntmachung des Hinweises auf die Patenterteilung: **10.03.1999**
(21) Anmeldenummer: 94710010.3
(22) Anmeldetag: 02.11.1994
(51) Int. Cl.: B60R 25/04

(54) **Verfahren zum Betrieb eines Diebstahlsicherungssystems für motorangetriebene Fahrzeuge**
Method of Operating a Theft Protection System for Motor-Driven Vehicles
Procédé de mise en marche d'un système de protection contre le vol pour véhicules à moteur

(30) Priorität: 08.11.1993 DE 4338033
(43) Veröffentlichungstag der Anmeldung: 17.05.1995
(73) Patentinhaber: TEMIC TELEFUNKEN microelectronic GmbH, 74072 Heilbronn (DE)
(72) Erfinder: Doerfler, Reiner, Dr., D-90403 Nürnberg (DE); Ertel, Rainer, D-90513 Zirndorf (DE); Friedrich, Ferdinand, D-90562 Heroldsberg (DE); Hettich, Gerhard, Dr., D-90599 Dietenhofen (DE); Kuhn, Mathias, D-90542 Frohnhof (DE); Dilz, Bernhard, D-71067 Sindelfingen (DE); Robitschko, Peter, D-71069 Sindelfingen (DE)
(74) Vertreter: Maute, Hans-Jürgen, Dipl.-Ing.

(56) Entgegenhaltungen:
- EP-A- 0 105 774
- EP-A- 0 372 741
- WO-A-93/05987
- WO-A-95/05958
- WO-A-95/11820
- GB-A- 2 251 503

## Beschreibung

Die Erfindung betrifft ein Verfahren zum Betrieb eines Diebstahlsicherungssystems für motorangetriebene Fahrzeuge.

Die stetig wachsende zahl der Diebstähle motorangetriebener Fahrzeuge - insbesondere von Personenkraftfahrzeugen - bereitet (nicht nur der Versicherungswirtschaft) in zunehmendem Maße ernsthafte Probleme. Mit der Zahl der Diebstähle wächst auch das Bedürfnis nach geeignetem und effizientem Diebstahlschutz; hierfür sind heutzutage einerseits mechanische Vorrichtungen (Lenkradsperren etc.) und andererseits Alarmanlagen zur Überwachung von Türkontakten, Stromschleifen oder Innenräumen gebräuchlich.
Da bei Diebstählen von motorangetriebenen Fahrzeugen in den meisten Fällen das Lenkradschloß aufgebrochen und der Anlaßschalter (das Zündschloß) kurzgeschlossen wird, werden für Fahrzeuge mit vernetzten Steuergeräten auch verschiedene Diebstahlsicherungssysteme angeboten, durch die ein unbefugtes Starten des Fahrzeugs ohne Zündschlüssel verhindert werden soll; der Motorstart kann bei diesen elektronischen Wegfahrsperren erst dann erfolgen, wenn ein zum Betrieb des Fahrzeugs notwendiges Steuergerät (beispielsweise die Motorelektronik) ein "Freigabesignal" erhalten hat. Beispielsweise wird dieses Freigabesignal nur dann erzeugt, wenn zusätzlich zur Betätigung des Zündschlüssels ein mehrstelliger Zahlencode über eine Eingabeeinheit am Armaturenbrett eingegeben wird, wenn bei der Betätigung des Zündschlüssels eine Codekarte in einem zugehörigen Leseschacht steckt oder wenn ein elektronischer Schlüssel vom autorisierten Benutzer des Fahrzeugs zum freigebenden Steuergerät gesendet wurde (dies kann beispielsweise durch eine Fernbedienung oder durch kurzreichweitige Signale eines Transponders erfolgen).
Hierbei ist aber eine zusätzliche Tätigkeit des Benutzers beim Starten des Fahrzeugs erforderlich (Eingabe des Codes, Einführen der Codekarte), zur Gewährleistung eines effektiven Schutzes muß die Eingabe des codes oder das Lesen der Codekarte bei jedem Starten des Fahrzeugs erfolgen , was bald als "lästig" angesehen wird, und es ist insbesondere nur eine unidirektionale Verbindung zum freigebenden Steuergerät hin vorhanden, womit keine Überprüfung dieses Steuergerätes (Startelektronik, Motorelektronik etc.) stattfindet, so daß die Startbereitschaft unerlaubterweise durch Austausch oder Manipulation des betreffenden Steuergeräts hergestellt werden kann.
Aus der EP 0 372 741 A2 ist ein Fahrzeugsicherungssystem bekannt, das ein Motorsteuergerät mit einer fahrzeugspezifischen Identifikationsnummer, mindestens ein weiteres Steuergerät mit einer fahrzeugspezifischen Identifikationsnummer, eine Tastatur und eine Fernbedienung beinhaltet. Beim Verfahren zum Betrieb dieses Diebstahlsicherungssystems werden bei jedem Motorstartvorgang zur Verifizierung Daten zwischen zwei Steuergeräten übertragen, wobei deren fahrzeugspezifische Identifikationsnummern (codeworte) im Klartext gesendet und auf Gleichheit überprüft werden ("parity check"); insbesondere kann das Motorsteuergerät als eines dieser Steuergeräte das in einem weiteren Steuergerät gespeicherte Codewort abfragen, woraufhin das weitere Steuergerät sein Codewort im Klartext an das Motorsteuergerät sendet. Da die Codeworte (die Identifikationsnummern) als unveränderliche Paßworte fungieren, ist ein Angriff auf dieses Diebstahlsicherungssystem durch Auslesen und Kopieren der Codeworte (Identifikationsnummern) leicht möglich.
Aus der WO 93/05987 A1 ist ein Fahrzeugsicherungssystem bekannt, bei dem über einen Datenbus Codewörter von einem codierten Schlüssel zu den Steuergeräten des Fahrzeugs und Codewörter zwischen den verschiedenen Steuergeräten des Fahrzeugs im Klartext übertragen werden und unverändert bleiben; hierurch ist ein Angriff auf dieses Diebstahlsicherungssystem durch Kopieren der Codewörter leicht möglich.
In der druckschriftlich nicht vorveröffentlichten WO 95/11820 A1 wird eine Fahrzeugsicherungsanordnung beschrieben, bei der eine Kommunikation zwischen verschiedenen Steuergeräten des Fahrzeugs und einem die Kontrollfunktion übernehmenden fahrzeugexternen Gerät über eine Datenleitung vorgenommen werden kann.
Aus der WO 95/05958 A1, die für die benannten Vertragsstaaten DE, FR, GB einen Stand der Technik nach Artikel 54 (3) und (4) EPÜ bildet, ist eine wegfahrsperre für ein Kraftfahrzeug bekannt, bei der von einer Prüfeinheit ein Anforderungssignal zur Übermittlung von in Steuergeräten gespeicherten Kennungscodeworten ausgesandt wird. Die Prüfeinheit gibt alle Steuergeräte frei, falls bei der Abfrage mindestins eine vorbestimmte Anzahl von Steuergeräten mit ihrem (richtigen) Kennungscode wort (Fest - oder Welchselcode) antworten.

Der Erfindung liegt die Aufgabe zugrunde, ein Verfahren zum Betrieb eines Diebstahlsicherungssystems für motorangetriebene Fahrzeuge anzugeben, das die genannte Problematik mildert und mit dem sich Diebstähle motorangetriebener Fahrzeuge nachhaltig und ohne großen Aufwand verhindern lassen.
Diese Aufgabe wird erfindungsgemäß durch die Merkmale des Patentanspruchs 1 gelöst.
Vorteilhafte weiterbildungen der Erfindung ergeben sich aus den nachfolgenden Patentansprüchen.

Das Diebstahlsicherungssystem umfaßt ein eine wegfahrsperrenfunktion enthaltendes Steuergerät (Steuergerät "wegfahrsperre"), mindestens ein weiteres, mit dem Steuergerät wegfahrsperre bidirektional verbundenes Steuergerät sowie optional einen externen, separaten Datenträger. Zur individuellen Zuordnung der Steuergeräte zum jeweiligen Fahrzeug tragen das Steuergerät wegfahrsperre und die anderen am Diebstahlsicherungssystem beteiligten Steuergeräte (beispielsweise die Motorsteuerung) fahrzeugspezifische geheime Identifikationsnummern, die auch auf dem Datenträger ("elektronischer Fahrzeugbrief") gespeichert sind; die Steuergeräte können entweder alle die gleiche Identifikationsnummer besitzen oder aber unterschiedliche Identifikationsnummern aufweisen, die dann den jeweils anderen Steuergeräten bekannt sein müssen. Durch die bidirektionale Verbindung zwischen dem Steuergerät wegfahrsperre und den weiteren Steuergeräten ist ein Datenaustausch zwischen den Steuergeräten in beiden Richtungen möglich; gegebenenfalls können auch die weiteren Steuergeräte wechselseitig bidirektional (netzartig) miteinander verbunden werden.
Ein Diebstahlschutz wird mittels des Verfahrens zum Betrieb des Diebstahlsicherungssystems auf zweierlei weise erreicht:
a) durch eine bidirektionale Verifizierung der Identifikationsnummern zwischen dem Steuergerät wegfahrsperre und den weiteren Steuergeräten zumindest bei jedem Startvorgang (die Verifizierung kann darüber hinaus auch öfters - beispielsweise in bestimmten zeitlichen Abständen - erfolgen). Beim Ausschalten der Zündung (Abfallen der Batteriespannung) wird das Steuergerät Wegfahrsperre aktiviert ("geschärft"); beim Startvorgang (Betätigung der Zündung) werden die Identifikationsnummern aller beteiligten Steuergeräte überprüft, bei erfolgreicher Verifizierung wird das Steuergerät Wegfahrsperre deaktiviert ("entschärft''). Zur bidirektionalen Verifizierung kann beispielsweise jeweils eines der beteiligten Steuergeräte eine Zufallszahl erzeugen, diese nach einem bestimmten Algorithmus mit den Identifikationsnummern der anderen Steuergeräte verknüpfen und so durch die Antwort aller anderen Steuergeräte deren Zuverlässigkeit überprüfen.
b) durch den Datenträger, beispielsweise eine chipkarte, sind die Steuergeräte einem Fortbewegungsmittel (manipulationssicher) fest zugeordnet und somit vor unerlaubtem Austausch geschützt. In einer Diagnosebetriebsart können die Identifikationsnummernbeispielsweise vom Diagnoserechner in einer Werkstatt - von dem Datenträger (der Chipkarte) ausgelesen werden; wurde ein kompletter Satz von diebstahlrelevanten Steuergeräten ausgetauscht, ist dies beim Werkstattbesuch erkennbar, da die auf dem Datenträger (der Chipkarte) gespeicherten Daten und die Identifikationsnummern der Steuergeräte nicht übereinstimmen. Das Eintragen von Identifikationsnummern in den Speicher der Steuergeräte kann beispielsweise über den Diagnoserechner erfolgen. Die Identifikationsnummern können aber auch (oder zusätzlich) in einem zentralen Großrechner gespeichert werden, der beispielsweise über die relevanten Daten aller Kraftfahrzeuge eines Herstellers verfügt; zum Eintrag in ein bestimmtes Steuergerät muß dann eine Verbindung vom Diagnoserechner zum Großrechner hergestellt werden, wobei der Datenträger (die Chipkarte) als eine zusätzliche Zugangsberechtigung dient (diese weist den Besitzer des Datenträgers als rechtmäßigen Kfz-Besitzer aus). Weiterhin kann entweder auf dem Datenträger (der Chipkarte) oder im Großrechner eine Art ''Lebenslauf'' für die Steuergeräte jedes Fahrzeugs angelegt werden.

Beim vorgestellten Verfahren zum Betrieb eines Diebstahlsicherungssystems ist ein effizienter Diebstahlschutz gegeben, da Manipulationsversuchen durch die bidirektionale Verifizierung der Steuergeräte und durch die Speicherung der Identifikationsnummern auf dem externen Datenträger wirksam vorgebeugt wird: demzufolge kann die elektronische Wegfahrsperre durch Austausch des Steuergeräts Wegfahrsperre oder eines anderen Steuergeräts nicht aufgehoben werden - ein Austausch von diebstahlsicherheitsrelevanten Steuergeräten ist nur durch Kommunikation des Datenträgers mit dem Diagnoserechner und/oder dem zentralen Großrechner möglich.

Im folgenden wird exemplarisch der Ablauf eines (bidirektionalen) Verifizierungsprotokolls zwischen dem Steuergerät Wegfahrsperre und einem weiteren zu sperrenden Steuergerät beim Startvorgang eines Kraftfahrzeugs erläutert; hierbei wird angenommen, daß die Identifikationsnummern aller Steuergeräte des Diebstahlsicherungssystems identisch sind:
- ein berechtigter elektronischer Schlüssel setzt das Steuergerät Wegfahrsperre auf ''offen'', beispielsweise durch Übermittlung des Wechselcodes eines im Schlüsselkopf integrierten Transponders oder einer Fernbedienung
- durch Drehen des Schlüssels im Zündschloß wird die Klemme 15 (Zündung) aktiviert
- das Steuergerät Wegfahrsperre sendet eine erste (Pseudo-) Zufallszahl an das jeweilige zu sperrende Steuergerät und berechnet mittels eines entsprechenden Algorithmus eine erste Geheimzahl als Funktion dieser Zufallszahl sowie seiner Identifikationsnummer
- das zu sperrende Steuergerät berechnet mittels des gleichen Algorithmus eine zweite Geheimzahl als Funktion der übermittelten ersten (Pseudo-) Zufallszahl sowie seiner Identifikationsnummer und sendet die zweite Geheimzahl an das Steuergerät Wegfahrsperre
- das Steuergerät Wegfahrsperre vergleicht, ob die von ihr errechnete erste Geheimzahl und die vom zu sperrenden Steuergerät berechnete zweite Geheimzahl identisch sind: stimmen diese beiden Zahlen nicht überein, sendet das Steuergerät Wegfahrsperre ein Unterbrechungssignal an alle weiteren Steuergeräte, da das zu sperrende Steuergerät eine falsche Identifikationsnummer zur Berechnung der Geheimzahl benutzt hat
- bei einer Übereinstimmung der beiden Geheimzahlen sendet das zu sperrende Steuergerät eine zweite (neue) (Pseudo-) Zufallszahl an das Steuergerät Wegfahrsperre und berechnet eine dritte Geheimzahl als Funktion der zweiten Zufallszahl und seiner Identifikationsnummer
- das Steuergerät Wegfahrsperre berechnet eine vierte Geheimzahl als Funktion der vom zu sperrenden Steuergerät gesendeten (Pseudo-) Zufallszahl sowie seiner Identifikationsnummer und sendet die vierte Geheimzahl an das zu sperrende Steuergerät
- das zu sperrende Steuergerät vergleicht die vom Steuergerät Wegfahrsperre übermittelte vierte Geheimzahl mit der von ihm berechneten dritten Geheimzahl: stimmen diese nicht überein, wird die Wegfahrsperre als nicht zulässig erkannt und Befehl des Steuergeräts Wegfahrsperre ignoriert
- stimmen die beiden Geheimzahlen dagegen überein, entriegelt sich das zu sperrende Steuergerät.
Der beschriebene Verifizierungsvorgang kann für alle zu sperrenden Steuergeräte durchgeführt werden, so daß letztendlich jedes Steuergerät auf seine Zulässigkeit hin überprüft wird.

## Patentansprüche

1. Verfahren zum Betrieb eines Diebstahlsicherungssystems für motorangetriebene Fahrzeuge, bei dem
a) einem die Wegfahrsperrenfunktion enthaltenden Steuergerät eine fahrzeugspezifische geheime Identifikationsnummer zugeordnet wird,
b) mindestens einem weiteren Steuergerät eine fahrzeugspezifische geheime Identifikationsnummer zugeordnet wird, und
c) die fahrzeugspezifischen geheimen Identifikationsnummern gemäß einem über eine bidirektionale Verbindungsleitung zwischen dem die Wegfahrsperrenfunktion enthaltenden Steuergerät und dem mindestens einen weiteren Steuergerät ablaufenden bidirektionalen Verifizierungsprotokoll, unter Verknüpfung der fahrseugspezifischen geheimen Identifikationsnummern mit Zufallszahlen, mindestens bei jedem Motorstartvorgang bidirektional verifiziert werden.

2. Verfahren nach Anspruch 1, dadurch gekennzeichnet, daß dem Diebstahlsicherungssystem ein externer, nur nach Durchlauf einer speziellen Sicherheitsprozedur auslesbarer Datenträger zugeordnet wird, und daß auf dem Datenträger die fahrzeugspezifischen Identifikationsnummern des die wegfahrsperrenfunktion enthaltenden Steuergeräts und des mindestens einen weiteren Steuergeräts gespeichert werden.

3. Verfahren nach Anspruch 1, dadurch gekennzeichnet, daß dem Diebstahlsicherungssystem weitere Steuergeräte zugeordnet werden, und daß die weiteren Steuergeräte über bidirektionale Verbindungseitungen netzartig miteinander verbunden werden.

4. Verfahren nach einem der Ansprüche 1 bis 3, dadurch gekennzeichnet, daß dem die Wegfahrsperrenfunktion enthaltenden Steuergerät und dem mindestens einen weiteren Steuergerät des Fahrzeugs die gleiche Identifikationsnummer zugeordnet wird.

5. Verfahren nach einem der Ansprüche 1 bis 3, dadurch gekennzeichnet, daß dem die wegfahrsperrenfunktion enthaltenden Steuergerät und dem mindestens einen weiteren Steuergerät des Fahrzeugs unterschiedliche Identifikationsnummern zugeordnet werden, die den jeweils anderen Steuergeräten bekannt sind.

6. Verfahren nach einem der Ansprüche 2 bis 5, dadurch gekennzeichnet, daß der Datenträger in einem externen Diagnoserechner einer Werkstatt ausgelesen wird, und daß die auf dem Datenträger gespeicherten fahrzeugspezifischen Identifikationsnummern mit den aktuellen Identifikationsnummern des die wegfahrsperrenfunktion enthaltenden Steuergeräts und des mindestens einen weiteren Steuergeräts verglichen werden.

7. Verfahren nach Anspruch 6, dadurch gekennzeichnet, daß die Kommunikation zwischen dem Datenträger und dem Diagnoserechner über einen zusätzlichen Verschlüsselalgorithmus mit eigenem Kommunikationsschlüssel durchgeführt wird.

8. Verfahren nach einem der Ansprüche 2 bis 7, dadurch gekennzeichnet, daß die fahrzeugspezifischen Identifikationsnummern des die Wegfahrsperrenfunktion enthaltenden Steuergeräts und des mindestens einen weiteren Steuergeräts in einem Großrechner des Fahrzeugherstellers gespeichert werden, und daß der Datenträger als zusätzliche Zugangsvoraussetzung zum Großrechner herangezogen wird.

9. Verfahren nach Anspruch 8, dadurch gekennzeichnet, daß die Kommunikation zwischen dem Großrechner und dem die wegfahrsperrenfunktion enthaltenden Steuergerät und dem mindestens einen weiteren Steuergerät und/oder dem Datenträger über einen zusätzlichen Verschlüsselungsalgorithmus mit eigenem Kommunikationsschlüssel durchgeführt wird.

10. Verfahren nach einem der Ansprüche 2 bis 9, dadurch gekennzeichnet, daß der Datenträger als Chipkarte realisiert wird.

11. Verfahren nach einem der Ansprüche 2 bis 9, dadurch gekennzeichnet, daß der Datenträger als Transponder realisiert wird.

## Claims

1. A method of operating an anti-theft system for motor-driven vehicles wherein
a) a vehicle-specific, secret identification number is assigned to a control device containing the immobilising function,
b) a vehicle-specific, secret identification number is assigned to at least one further control device and
c) the vehicle-specific, secret identification numbers are bidirectionally verified in accordance with a bidirectional verification protocol executed via a bidirectional connection line between the control device containing the immobilising function and the at least one further control device by linking the vehicle-specific, secret identification numbers with random numbers, at least upon each engine starting procedure.

2. A method according to Claim 1, characterised in that an external data carrier, readable only after the execution of a special security procedure, is associated with the antitheft system and the vehicle-specific identification numbers of the control device containing the immobilising function and the at least one further control device are stored on the data carrier.

3. A method according to Claim 1, characterised in that further control devices are associated with the anti-theft system and the further control devices are connected to one another in the form of a network via bidirectional connection lines.

4. A method according to one of Claims 1 to 3, characterised in that the same identification number is assigned to the control device containing the immobilising function and the at least one further control device of the vehicle.

5. A method according to one of Claims 1 to 3, characterised in that different identification numbers are assigned to the control device containing the immobilising function and the at least one further control device of the vehicle, which identification numbers are in each case known to the other control devices.

6. A method according to one of Claims 2 to 5, characterised in that the data carrier is read in an external diagnostic computer of a workshop and the vehicle-specific identification numbers stored on the data carrier are compared with the actual identification numbers of the control device containing the immobilising function and of the at least one further control device.

7. A method according to Claim 6, characterised in that the communication between the data carrier and the diagnostic computer is effected via an additional code algorithm with an individual communications code.

8. A method according to one of Claims 2 to 7, characterised in that the vehicle-specific identification numbers of the control device containing the immobilising function and the at least one further control device are stored in a mainframe computer of the vehicle manufacturer and the data carrier is used as additional condition of access to the mainframe computer.

9. A method according to Claim 8, characterised in that the communication between the mainframe computer and the control device containing the immobilising function and the at least one further control device and/or the data carrier is effected via an additional code algorithm with an individual communications code.

10. A method according to one of Claims 2 to 9, characterised in that the data carrier has the form of a chip card.

11. A method according to one of Claims 2 to 9, characterised in that the data carrier has the form of a transponder.

## Revendications

1. Procédé de mise en marche d'un système de protection contre le vol pour véhicules à moteur, selon lequel
a) à un appareil de commande contenant la fonction de blocage de démarrage est associé un nombre d'identification secret spécifique du véhicule,
b) à au moins un autre appareil de commande est associé un numéro d'identification secret spécifique du véhicule, et
c) les numéros d'identification secrets spécifiques du véhicule sont vérifiés de façon bidirectionnelle au moins lors de chaque opération de démarrage du moteur selon un protocole de vérification bidirectionnel se déroulant entre l'appareil de commande contenant la fonction de blocage de démarrage et au moins un autre appareil de commande, par combinaison des numéros d'identification secrets spécifiques du véhicule avec des nombres aléatoires.

2. Procédé selon la revendication 1, caractérisé en ce qu'au système de protection contre le vol est associé un support de données extérieur lisible uniquement après déroulement d'une procédure de protection spéciale, et en ce que sur le support de données sont mémorisés les numéros d'identification spécifiques du véhicule de l'appareil de commande contenant la fonction de blocage de démarrage et d'au moins un autre appareil de commande.

3. Procédé selon la revendication 1, caractérisé en ce qu'au système de protection contre le vol sont associés d'autres appareils de commande, et en ce que les autres appareils de commande sont réunis les uns aux autres à la manière d'un réseau par l'intermédiaire de lignes de liaison bidirectionnelles.

4. Procédé selon l'une quelconque des revendications 1 à 3, caractérisé en ce qu'à l'appareil de commande contenant la fonction de blocage de démarrage et au moins à un autre appareil de commande du véhicule est associé le même numéro d'identification.

5. Procédé selon l'une quelconque des revendications 1 à 3, caractérisé en ce qu'à l'appareil de commande contenant la fonction de blocage de démarrage et à au moins un autre appareil de commande du véhicule sont associés différents numéros d'identification, qui sont connus des autres appareils de commande respectifs.

6. Procédé selon l'une quelconque des revendications 2 à 5, caractérisé en ce que le support de données est lu dans un calculateur de diagnostic extérieur d'un atelier et en ce que les numéros d'identification spécifiques du véhicule mémorisés sur le support de données sont comparés aux numéros d'identification réels de l'appareil de commande contenant la fonction de blocage de démarrage et d'au moins un autre appareil de commande.

7. Procédé selon la revendication 6, caractérisé en ce que la communication entre le support de données et le calculateur de diagnostic est effectué par l'intermédiaire d'un algorithme de codage supplémentaire avec une clé de communication entre eux.

8. Procédé selon l'une quelconque des revendications 2 à 7, caractérisé en ce que les numéros d'identification spécifiques du véhicule de l'appareil de commande contenant la fonction de blocage de démarrage et d'au moins un autre appareil de commande sont mémorisés dans un calculateur de grande capacité du constructeur, et en ce que le support de données est utilisé en tant qu'hypothèse d'accès supplémentaire au calculateur de grande capacité.

9. Procédé selon la revendication 8, caractérisé en ce que la communication entre le calculateur de grande capacité et l'appareil de commande contenant la fonction de blocage de démarrage et au moins un autre appareil de commande et/ou le support de données est effectuée par l'intermédiaire d'un algorithme de codage supplémentaire avec une clé de communication propre.

10. Procédé selon l'une quelconque des revendications 2 à 9, caractérisé en ce que le support de données est réalisé sous la forme d'une carte à puce.

11. Procédé selon l'une quelconque des revendications 2 à 9, caractérisé en ce que le support de données est réalisé sous la forme d'un transpondeur.
